# EUROPÄISCHE PATENTSCHRIFT

(11) **EP 1 170 078 B1**
(45) Veröffentlichungstag und Bekanntmachung des Hinweises auf die Patenterteilung: **10.09.2003**
(21) Anmeldenummer: 00113184.6
(22) Anmeldetag: 03.07.2000
(51) Int. Cl.: B23B 31/12

(54) **Bohrfutter mit einer eine Steuerkurve aufweisenden Spannhülse**
Drilling chuck with a locknut having a steering-curve
Bague de serrage ayant une came de commande

(43) Veröffentlichungstag der Anmeldung: 09.01.2002
(73) Patentinhaber: Röhm GmbH, 89567 Sontheim (DE)
(72) Erfinder: Röhm, Günter Horst, 89567 Sontheim (DE)
(74) Vertreter: Hentrich, Swen Dipl.-Phys. Dr.

(56) Entgegenhaltungen:
- EP-A- 0 590 754
- DE-U- 9 421 725
- US-A- 5 499 830
- US-A- 5 765 839

## Beschreibung

Die Erfindung betrifft ein Bohrfutter mit einem an einer Bohrspindel anschließbaren Futterkörper, mit zwischen sich eine Aufnahme für das Bohrwerkzeug bildenden Spannbacken, die in geneigt zur Futterachse verlaufenden Führungsaufnahmen zum öffnen und Schließen des Bohrfutters durch einen am Futterkörper drehbar und axial unverschiebbar geführten Gewindering verstellbar sind, und mit einer der Verstellung der Spannbacken durch Verdrehung des Gewinderings dienenden Spannhülse, die eine . Steuerkurve zur Betätigung einer die Verdrehung des Gewinderinges verhindernden bzw. freigebenden Sperreinrichtung aufweist.

Ein derartiges Bohrfutter ist aus der EP 0 785 041 A1 bekannt, bei dem die Spannhülse zweiteilig mit einem äußeren metallenen Mantel und einem inneren, aus Kunststoff gefertigten Mantel gebildet ist. Dabei dient der äußere Mantel dazu, eine gegen Beschädigungen unempfindliche und widerstandsfähige Außenfläche bereitzustellen, so daß Beschädigungen im Bohrbetrieb oder durch Ansetzen einer Zange zum Drehen der Spannhülse weitgehend vermieden werden, während der innere, aus Kunststoff bestehende Mantel dazu vorgesehen ist, zur Ausbildung der Steuerkurve geformt zu werden, was im Spritzgußverfahren leicht möglich ist, mit dem auch komplizierte Gestaltungen gefertigt werden können. Dieses bekannte Bohrfutter vermeidet den Nachteil, die Steuerkurve von innen heraus durch spanende Bearbeitung herstellen zu müssen, was nur unter hohen Material-, Kosten- und Zeitaufwand möglich wäre. Dennoch ist ein relativ hoher Aufwand notwendig, um die beiden Mäntel separat zu fertigen und im Produktionsprozeß zusammenzuführen.

Der Erfindung liegt daher die Aufgabe zugrunde, ein Bohrfutter der eingangs genannten Art so auszubilden, daß ein kostengünstig herzustellender einteiliger Aufbau der Spannhülse zur Ausbildung der Steuerkurve und Betätigung der Sperreinrichtung ausreichend ist. Der Erfindung liegt weiterhin die Aufgabe zugrunde, ein Verfahren anzugeben, wie eine derartige Spannhülse gefertigt werden kann.

Die der Erfindung zugrunde liegende Aufgabe wird für den die Vorrichtung betreffenden Teil bei einem Bohrfutter der eingangs genannten Art dadurch gelöst, daß die Steuerkurve durch Stege gebildet ist, die von der radial äußeren Seite der aus Metall bestehenden Spannhülse nach innen vorstehen.

Dieses erfindungsgemäße Bohrfutter bietet den Vorteil, daß nicht im Inneren der Spannhülse die Strukturen zur Bildung der Steuerkurve herausgearbeitet werden müssen, sondern daß die Spannhülse von der Außenseite aus bearbeitet werden kann, wobei diese dabei so verformt wird, daß sich auf der Innenseite die Steuerkurve ausbildet.

Dabei ist besonders bevorzugt, wenn die Stege durch die Seitenwände mindestens einer in die Spannhülse eingeprägten Tasche gebildet sind, da die Tasche ein in sich stabiles Gebilde darstellt, das bei der üblichen Beanspruchung bei Verstellung der Spannhülse nicht deformiert wird.

Günstig ist es weiterhin, wenn die in Umfangsrichtung der Spannhülse einander gegenüberliegenden Stege der Taschen zur Betätigung der Sperreinrichtung vorgesehen sind, da so die zur Verstellung der Spannbacken notwendige Drehbewegung genutzt werden kann, um die Sperreinrichtung zu betätigen.

Es hat sich weiterhin als vorteilhaft gezeigt, wenn über den Umfang der Spannhülse verteilt mehrere Taschen vorgesehen sind. Diese Taschen können dann auch dazu genutzt werden, eine Fingerkuppe in diese einzulegen, um so beim Verdrehen der Spannhülse ein großes Drehmoment erzeugen zu können.

Alternativ besteht auch die Möglichkeit, daß die Steuerkurve durch eine Kappe überdeckt ist, wobei zweckmäßigerweise die Kappe durch eine axial am Futterkörper abgestützte Staubschutzkappe gebildet ist.

Um ein sicheres Funktionieren der Sperreinrichtung zu gewährleisten, ist weiterhin vorgesehen, daß die Sperreinrichtung aus einem koaxialen Kranz von Sperrausnehmungen und aus mindestens einem Sperrglied besteht, das unter der Kraft einer Sperrfeder durch die Steuerkurve in die Sperrausnehmungen einrückbar ist, wobei das Sperrglied und die Sperrausnehmungen einander in derart geneigten Flankenflächen anliegen, daß diese den Gewindering in der dem Öffnen des Bohrfutters entsprechenden Drehrichtung gegen Verdrehen sperren und beim Verdrehen in der anderen Drehrichtung das Sperrglied gegen die Kraft der Sperrfeder aus den Sperrausnehmungen herausdrücken, und daß durch eine der in die Spannhülse eingeprägten Taschen ein Schaltnocken zur Federspannung gegeben ist. Vorteilhaft ist dabei, wenn der Gewindering drehfest mit einem koaxialen Zwischenring verbunden ist, der die Sperrfeder und das Sperrglied trägt, und wenn der Zwischenring durch Anschläge begrenzt relativ zur Spannhülse verdrehbar ist.

Bevorzugt ist weiterhin eine Ausführungsform, die dadurch gekennzeichnet ist, daß eine in Umfangsrichtung zwei Raststellungen aufweisende Rasteinrichtung vorgesehen ist, wobei sich das durch einen Rastnocken einer Rastfeder gebildete Rastglied bei dem in die Sperrausnehmungen eingerückten Sperrglied in der einen Raststellung und bei dem ausgerückten Sperrglied in der anderen Raststellung befindet, und daß die Steuerkurve die beiden Raststellungen beinhaltet. Die Rasteinrichtung dient dazu, bei offenem Bohrfutter die gegenseitige Drehmitnahme von Spannhülse und Zwischenring zu sichern und bei geschlossenem Bohrfutter auszuschließen, daß sich im Bohrbetrieb die Spannhülse selbsttätig gegenüber der Zwischenhülse verstellt und so die Sperreinrichtung betätigt. Insbesondere soll die Rasteinrichtung auch sicher stellen, daß bei offenem Bohrfutter der Gewindering von der Spannhülse beim Verdrehen mitgenommen wird, ohne daß das Sperrglied in den eingerückten Zustand verstellt wird.

Da die aus Metall gefertigte Spannhülse eine gegenüber aus Kunststoff bestehenden Spannhülsen eine größere Masse aufweist und bei modernen Bohrmaschinen als Sicherheitseinrichtung eine Spindelstop-Funktion realisiert ist, wird die Sperreinrichtung stärker belastet. Um deren Funktioniere sicherzustellen, ist vorgesehen, daß an der Sperrfeder zwei zum simultanen Eingriff in die Sperrausnehmungen zur gemeinsamen Kraftübertragung vorgesehenen Sperrglieder ausgebildet sind, denen jeweils eine Tasche als Schaltnocken zugeordnet ist.

Weil beide Sperrglieder ihre Funktion nur ausüben können, wenn diese auch in Kontakt zu den als Randverzahnung realisierten Sperrausnehmungen gelangen, ist es zweckmäßig, wenn die Sperrfeder mit einem die Ausrichtung der Sperrglieder gegenüber der Sperrausnehmung ermöglichenden Spiel im Zwischenring angeordnet ist. Alternativ besteht naturgemäß die Möglichkeit, die Elastizität der Feder selber auszunutzen, um ein simultanes Anliegen der Sperrglieder an der Randverzahnung zu erreichen.

Hinsichtlich einer hohen Belastbarkeit der Sperrfeder ist es zweckmäßig, wenn die beiden Sperrglieder an den Enden der Sperrfeder angeordnet sind, wenn das in der dem Öffnen des Bohrfutter entsprechenden Drehrichtung vorn liegende Sperrglied in Richtung Sperrausnehmungen abgekröpft und das andere Sperrglied schleifenförmig gestaltet ist zur Einwirkung auf die zum vorderen Sperrglied übereinstimmende Flankenfläche.

Der Erhöhung der Belastbarkeit der Verriegelungseinrichtung insgesamt dient es, wenn die Rasteinrichtung zweifach vorgesehen ist, da so das Drehmoment erhöht wird, das benötigt wird, um die Rasteinrichtung zu betätigen.

Der Aufbau und die Montage des Bohrfutters wird dadurch vereinfacht, daß die Rastfeder und die Sperrfeder durch einen gemeinsamen Federbügel gebildet sind. Um dabei zu vermeiden, daß Schwingungen den Eingriff des Sperrgliedes in die Randverzahnung beeinträchtigen oder den Ansprechgrenzwert der Rasteinrichtung verschieben, ist dem Federbügel ein Dämpfungsglied zugeordnet, das zweckmäßigerweise durch eine dem Federbügel an seinen Federarmen aufgeprägte Wellenstruktur gebildet ist.

Zur Erhöhung der Belastbarkeit beziehungsweise als redundante Auslegung von Sicherungssystemen ist gekennzeichnet, daß der Federbügel mehrfach vorgesehen ist, wobei zweckmäßigerweise zwei Rastfedern und zwei Sperrfedern in Umfangsrichtung alternierend angeordnet sind.

Zur Begrenzung des Drehwinkels von der Spannhülse gegenüber der Zwischenhülse sind die Anschläge notwendig, die sich besonders einfach und kostengünstig dadurch realisieren lassen, daß die Spannhülse an ihrem axial vorderen Ende Stege aufweist, die zum Zusammenwirken mit der Zwischenhülse zugeordneten Anschlagstücken nach innen umgebördelt sind.

Damit stets ein sicheres Zusammenwirken mit den Anschlägen der Zwischenhülse gegeben ist, verlaufen die nach innen umgebördelten Stege geneigt zur Futterachse und/oder sind gekrümmt gestaltet. An den Stegen ist eine radial verlaufende Planfläche zur Anlage an einem axial fest am Futterkörper angeordneten Sicherungsring ausgebildet.

Eine ergänzende oder auch alternative Sicherung der Spannhülse läßt sich dadurch erreichen, daß in die Spannhülse Schlitze eingeprägt sind zur Aufnahme von der axialen Abstützung auf dem Zwischenring dienenden Ringschleifen einer Ringklammer.

Eine verbesserte Führung der Spannhülse wird erreicht, wenn die Ringschleifen am Futterkörper abgestützt sind.

Insbesondere wenn zur bevorzugten Betätigung des Bohrfutters durch die Bohrspindel eine Griffhülse am rückwärtigen Ende des Bohrfutters verzichtbar ist, ist es möglich, daß die Spannhülse den Futterkörper bis zu dessen rückwärtigem Ende überdeckt und dort durch eine axial am Futterkörper fixierte Abschlußscheibe gesichert ist.

Dies läßt sich besonders einfach dadurch erreichen, daß an der Abschlußscheibe sich in Umfangsrichtung erstreckende, radial federnde Zungen ausgebildet sind zum Eingriff in eine an der Spannhülse ausgebildeten Nut.

Alternativ besteht die Möglichkeit, daß an der Abschlußscheibe ein Scheibenbund angeformt ist, der zum Erzielen einer radialen Federwirkung durch Bundsegmente gebildet ist, die ein Einführen von deren radial nach außen gekrümmten Enden in eine an der Spannhülse ausgebildeten Nut ermöglicht.

Der das Verfahren betreffende Teil der Aufgabe wird nach der Erfindung gelöst durch ein Verfahren zur Herstellung einer eine Steuerkurve aufweisenden Spannhülse für ein Bohrfutter, wobei durch mindestens einen Stempel mindestens eine radial von außen nach innen weisende Tasche in den Umfang der Spannhülse geprägt wird. Um eine Deformation der Spannhülse insgesamt dabei zu vermeiden ist vorgesehen, daß vor Annäherung des Stempels an die Spannhülsen in diese ein am Innenumfang zur Anlage kommender zylindrischer Stab eingeführt wird. Dabei besteht die Möglichkeit, daß der Stab axial von hinten in die Spannhülse eingeführt wird bis knapp vor die einzuprägende Tasche. Bevorzugt ist aber, wenn der Stab nach dem Einführen radial bis zur Anlage an den Innenumfang aufgeweitet und nach dem Einprägen der Tasche für seine Entfernung aus der Spannhülse radial wieder verengt wird, wobei der Stab nach Art einer Matrize eine der zu formenden Tasche aufweisende Aufnahme aufweist, in die der Stempel lokal die Außenfläche der Spannhülse einpreßt. Neben einer radialen Verstellung des die Taschen einformenden Stempels ist es gleichfalls möglich, daß zur Ausbildung der als in axialer Richtung orientierten Nut ausgebildeten Tasche der Stempel axial gegen die Spannhülse gepreßt wird.

Im folgenden soll die Erfindung an in der Zeichnung dargestellten Ausführungsbeispiele näher erläutert werden; es zeigen:
- Fig. 1: ein Bohrfutter nach der Erfindung, links in einem Axialschnitt, rechts in einer Seitenansicht, jeweils in der Stellung der Spannbacken bei geringstem Spanndurchmesser und im ungesperrten Futterzustand,
- Fig. 2: den Schnitt II - II aus Fig. 1, und zwar in der Teilfig. 2.1 im ungesperrten, in der Teilfig. 2.2 im gesperrten Futterzustand,
- Fig. 3: den Schnitt III - III aus Fig. 1,
- Fig. 4: eine der Fig. 1 entsprechende Darstellung mit durch eine Staubschutzkappe überdeckten Taschen,
- Fig. 5: den Schnitt V - V aus Fig. 4,

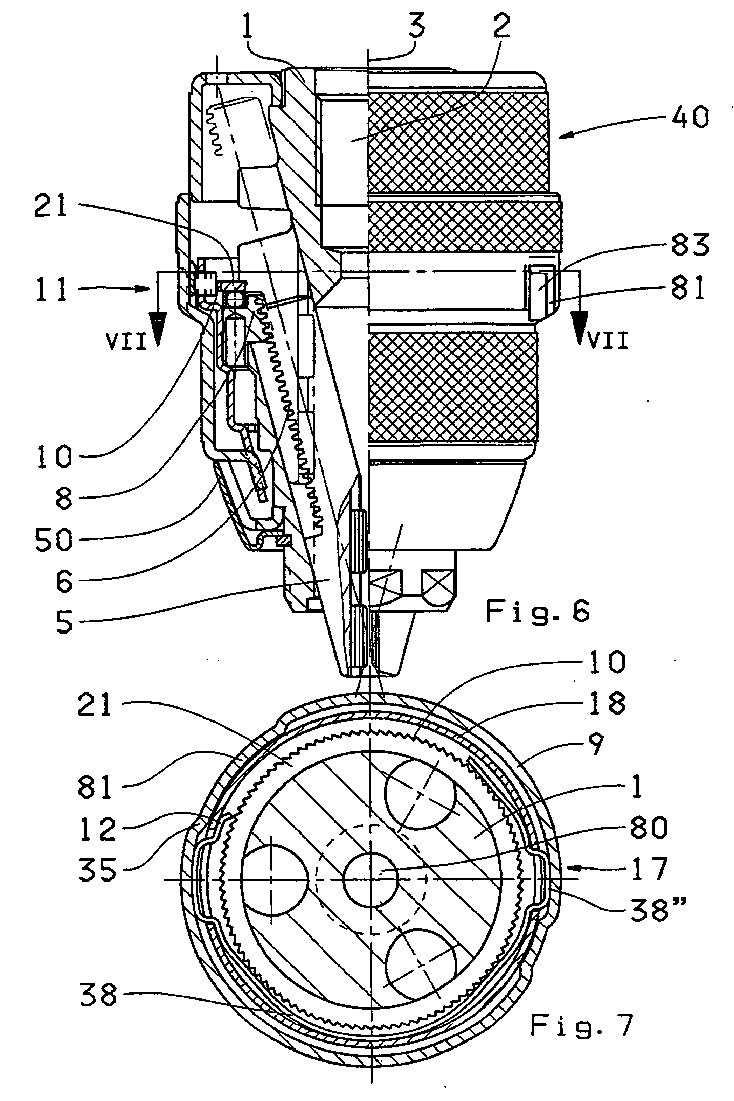

- Fig. 6: eine der Fig. 1 entsprechende Darstellung eines Bohrfutters mit einer axial rückwärtig hinter dem Gewindering angeordneten Sperreinrichtung,
- Fig. 7: den Schnitt VII - VII aus Fig. 6,
- Fig. 8: eine der Fig. 1 entsprechende Darstellung einer Ausführungsform mit zwei Sperrgliedern und umgebördelter Spannhülse,
- Fig. 9: den Schnitt IX - IX aus Fig. 8,
- Fig.10: eine der Fig. 1 entsprechende Darstellung einer Ausführungsform mit bis zum axial rückwärtigem Ende des Futterkörpers reichender Spannhülse,
- Fig.11: eine der Fig. 1 entsprechende Darstellung einer Ausführungsform mit axialer Sicherung der Spannhülse durch die Abdeckscheibe,
- Fig.12: den Schnitt XII - XII aus Fig. 11,
- Fig.13: eine alternative Ausführungsform zu dem Bohrfutter aus Fig. 11,
- Fig.14: den Schnitt XIV - XIV aus Fig. 13,
- Fig.15: eine weitere Alternative zu dem Bohrfutter aus Fig. 11 mit der gegenüber der Abdeckscheibe eingebördelter Spannhülse,

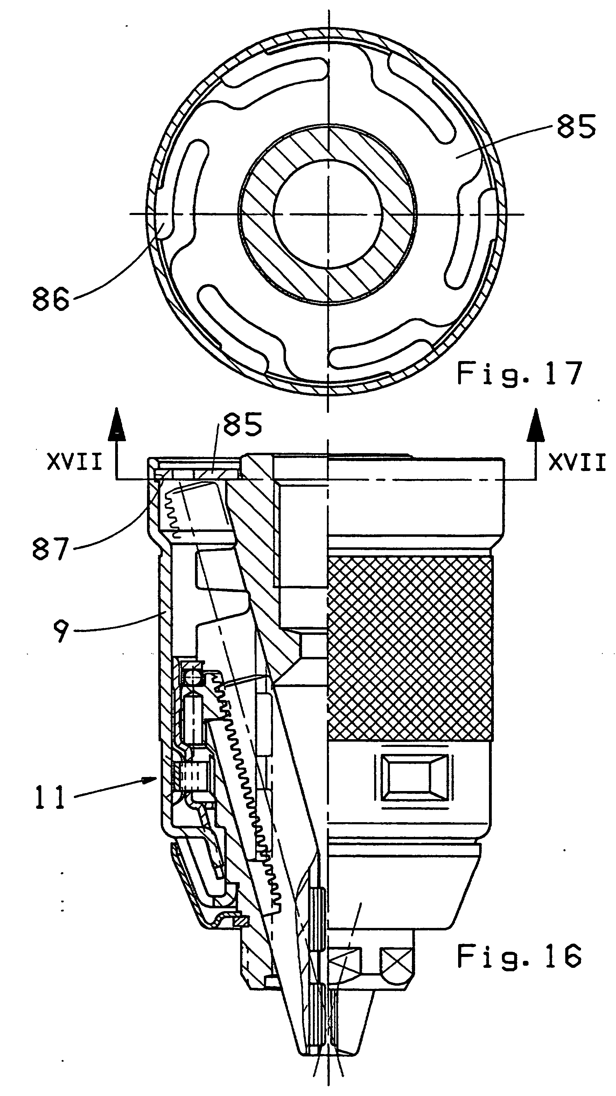

- Fig.16: eine nochmals andere Ausführungsform zur axialen Sicherung der Spannhülse am axial rückwärtige Ende des Futterkörpers,
- Fig.17: den Schnitt XVII - XVII aus Fig. 16,
- Fig.18: eine der Fig. 1 entsprechende Darstellung einer Ausführungsform mit einer am Zwischenring abgestützten Sicherungsklammer,
- Fig.19: den Schnitt XIX - XIX aus Fig. 18,
- Fig.20: eine alternative Ausführungsform zu dem Bohrfutter aus Fig. 18,
- Fig.21: den Schnitt XXI - XXI aus Fig. 20,
- Fig.22: eine der Fig. 2.2 entsprechende Darstellung einer Ausführungsform mit einer Sperrfeder erhöhter Dämpfung,
- Fig.23: eine der Fig. 2.2 entsprechende Darstellung mit einer modifizierten Sperrfeder mit 2 Schaltnoppen,
- Fig.24: eine Fig. 23 entsprechende Darstellung einer Sperrfeder mit 2 Rastgliedern und 2 Schaltnoppen,
- Fig.25: eine Fig. 23 entsprechende Darstellung mit 2 Sperrfedern,
- Fig.26: eine Fig. 23 entsprechende Darstellung mit einer das Sperrglied und einer das Rastglied tragenden Feder,
- Fig.27: eine zu Fig. 26 alternative Ausführungsform,
- Fig.28: eine zu Fig. 26 alternative Ausführungsform mit 3 Feder,
- Fig.29: eine zu Fig. 28 alternative Ausführungsform, und
- Fig.30: eine zu Fig. 28 alternative Ausführungsform mit 4 Federn.

Die in der Zeichnung dargestellten Bohrfutter dienen zur Aufnahme eines nicht dargestellten Bohrers und besitzen je einen Futterkörper 1 zum Anschluß an eine ebenfalls nicht dargestellte Bohrspindel. Zum Anschluß der Bohrspindel weist der Futterkörper 1 eine Gewindeaufnahme 2 auf, an die sich nach vorn ein axialer Durchgang 80 anschließen kann, um die Schläge eines in der Bohrspindel verschiebbar geführten Schlägers oder Döppers unmittelbar auf das Schaftende des in einer Werkzeugaufnahme 4 gehaltenen Bohrers übertragen zu können. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse 3 verstellbar sind. Die Ausführungsformen zeigen von Hand spannbare Bohrfutter, bei welchen die Spannbacken 5 im Futterkörper 1 geführt und über eine Backenverzahnung 6 mit einem Spanngewinde an einem Gewindering 8 in Eingriff stehen. Zur Verstellung der Spannbacken dient der Gewindering 8, der am Futterkörper 1 axial unverschiebbar und drehbar geführt und axial nach hinten über ein Kugellager 22, gegebenenfalls über einen Druckring 21, am Futterkörper 1 abgestützt ist.

Um unerwünschte Verstellungen der Spannbacken 5 zu verhindern, kann die Drehstellung des Gewinderings 8 fixiert werden. Dazu dient eine allgemein mit 11 bezeichnete und zwischen dem Gewindering 8 und dem Futterkörper 1 ausgebildete Sperreinrichtung, die aus einem koaxialen Kranz von Sperrausnehmungen 10 auf der Seite des Futterkörpers 1 und auf der Seite des Gewinderings 8 aus mindestens einem Sperrglied 12 besteht, das unter der Kraft einer Sperrfeder in die Sperrausnehmungen 10 greift. Dabei liegen das Sperrglied 12 und die es aufnehmenden Sperrausnehmungen 10 einander in derart geneigten Flankenflächen an, daß diese den Gewindering 8 in der dem Öffnen des Bohrfutters entsprechenden Drehrichtung (Pfeil 14) gegen Verdrehen verriegeln, beim Verdrehen des Gewinderings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung 10 zu Sperrausnehmung 10 entlang dem Umfang des Futterkörpers 1 verrutschen lassen. Unter den im Bohrbetrieb auftretenden Schwingungsbeanspruchungen des Bohrfutters bleibt das Bohrfutter aber auch in dieser dem Pfeil 15 entsprechenden Drehrichtung gesperrt. Die für dieses Sperrverhalten unterschiedliche Neigung der Flankenflächen wird auf einfache Weise durch eine sägezahnförmige Gestaltung erreicht, wobei die steilere Flankenfläche der Zahnbrust und die flachere Flankenfläche dem Zahnrücken entspricht.

Das Sperrglied 12 kann zwischen seinen an den Sperrausnehmungen 10 ein- und ausgerückten Zuständen verstellt werden, wozu das Sperrglied 12 durch eine Steuerkurve 35 an einer koaxialen, ebenfalls axial unverschiebbaren Spannhülse 9 verstellbar und entsprechend die Spannhülse 9 relativ zum Gewindering 8 verdrehbar ist. Die Steuerkurve 35 ist durch Stege 81 gebildet, die von der radial äußeren Seite der aus Metall bestehenden Spannhülse 9 nach innen vorstehen und durch eine Bodenplatte 82 verbunden sind, die insbesondere durch die Seitenwände von in die Spannhülse 9 eingeprägten Taschen 83 gebildet sind, wobei eine in die Spannhülse 9 eingeprägte Tasche 83 als Schaltnocken 84 für das Sperrglied 12 fungiert und damit die in Umfangsrichtung der Spannhülse 9 einander gegenüberliegenden Stege der Taschen 83 zur Betätigung der Sperreinrichtung 11 vorgesehen sind.

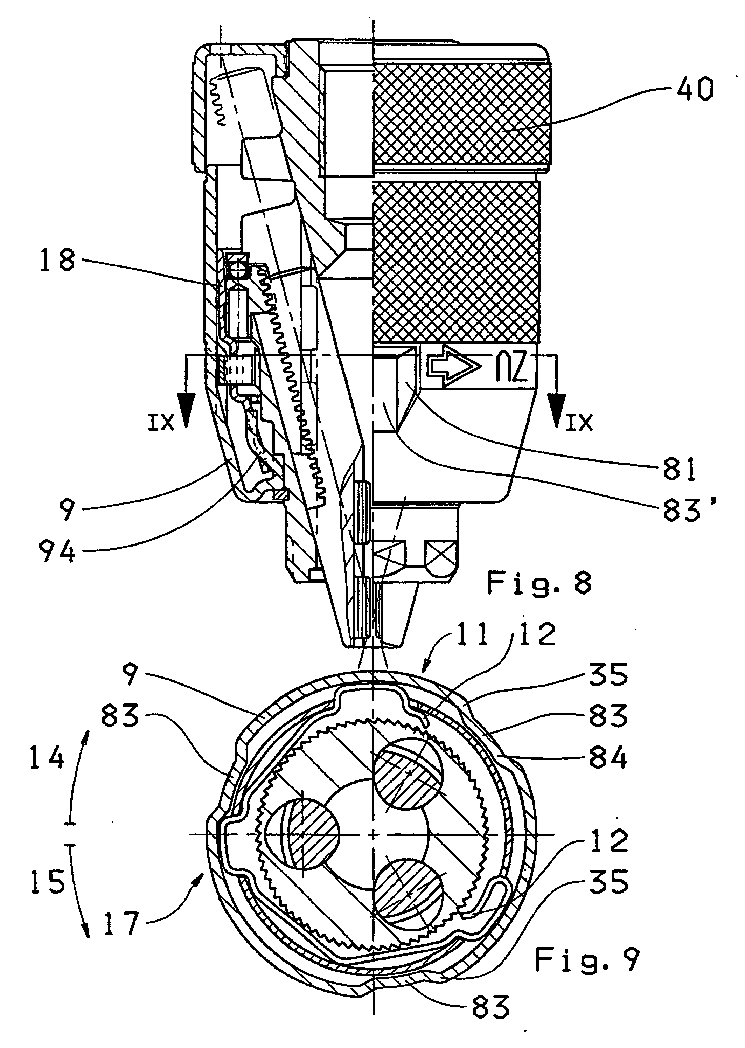

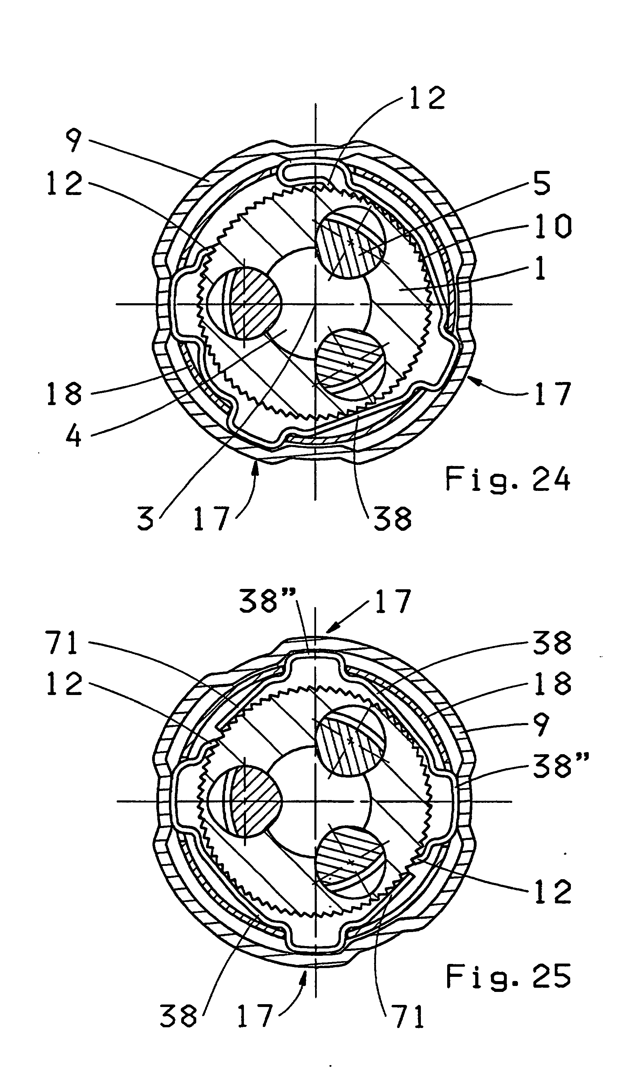

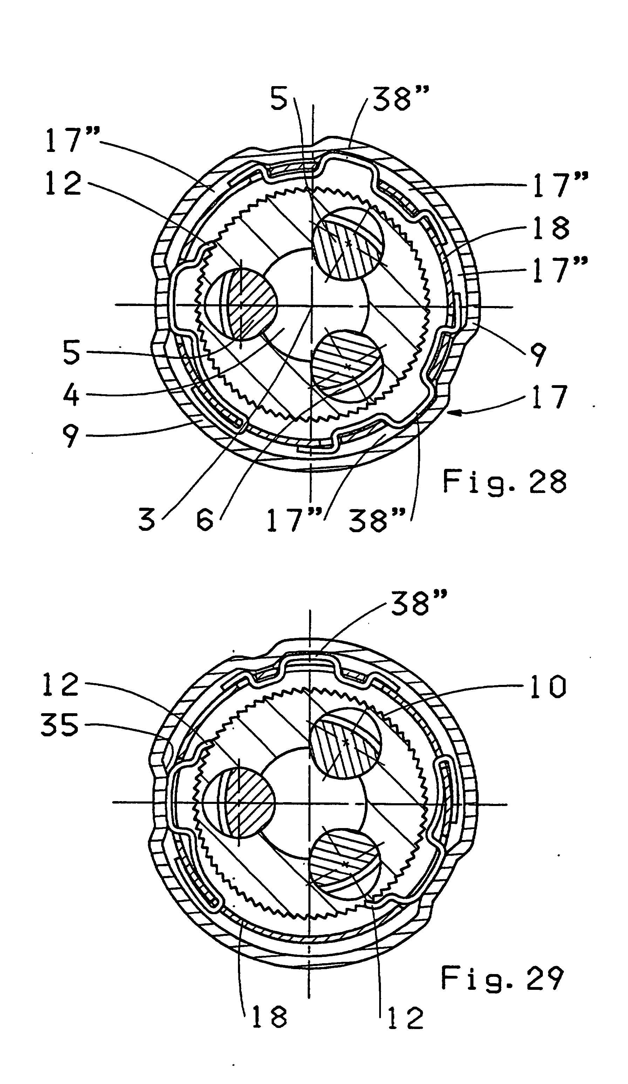

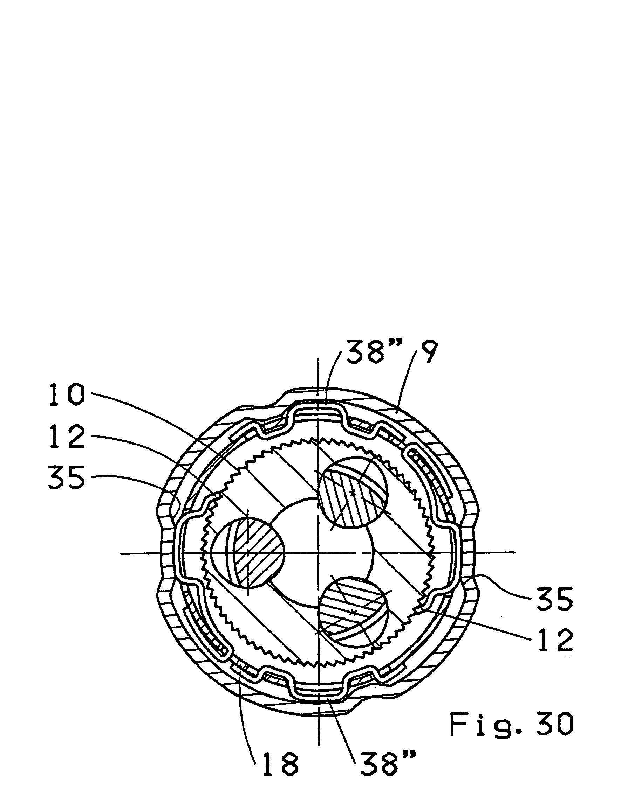

Bei der Ausführungsform gemäß den Fig. 8 und 9 sind an der Sperrfeder zwei zum simultanen Eingriff in die Randverzahnung zur gemeinsamen Kraftübertragung vorgesehene Sperrglieder 12 ausgebildet, denen jeweils eine Tasche 83 als Schaltnocken 83 zugeordnet ist, wobei die Sperrfeder mit einem die Ausrichtung der Sperrglieder 12 gegenüber den Sperrausnehmungen 10 ermöglichenden Spiel in einem Zwischenring 18 angeordnet ist. Die beiden Sperrglieder 12 sind an den Enden der Sperrfeder angeordnet, wobei das in der dem Öffnen des Bohrfutter entsprechenden Drehrichtung (Pfeil 14) vorn liegende Sperrglied 12 in Richtung Sperrausnehmungen 10 abgekröpft ist und das andere Sperrglied 12 schleifenförmig gestaltet ist zur Einwirkung auf die zum vorderen Sperrglied 12 übereinstimmende Flankenfläche. Es ist gleichfalls möglich, die beiden Sperrglieder 12 separaten Sperrfedern zuzuordnen. Es ist jeweils eine eigene Tasche 83 als Teil der Steuerkurve 35 zur Verstellung der Sperrglieder 12 vorgesehen (Fig. 25, 29,30).

Die Verdrehung der Spannhülse 9 relativ zum Gewindering 8 ist in beiden Drehrichtungen (Pfeile 14, 15) formschlüssig begrenzt, wozu Anschläge 16', 16" vorgesehen sind. Durch Verdrehen der Spannhülse 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen der Spannhülse 9 in der dem Öffnen des Bohrfutters entsprechenden Drehrichtung (Pfeil 14) aus dem eingerückten Zustand in den ausgerückten Zustand.

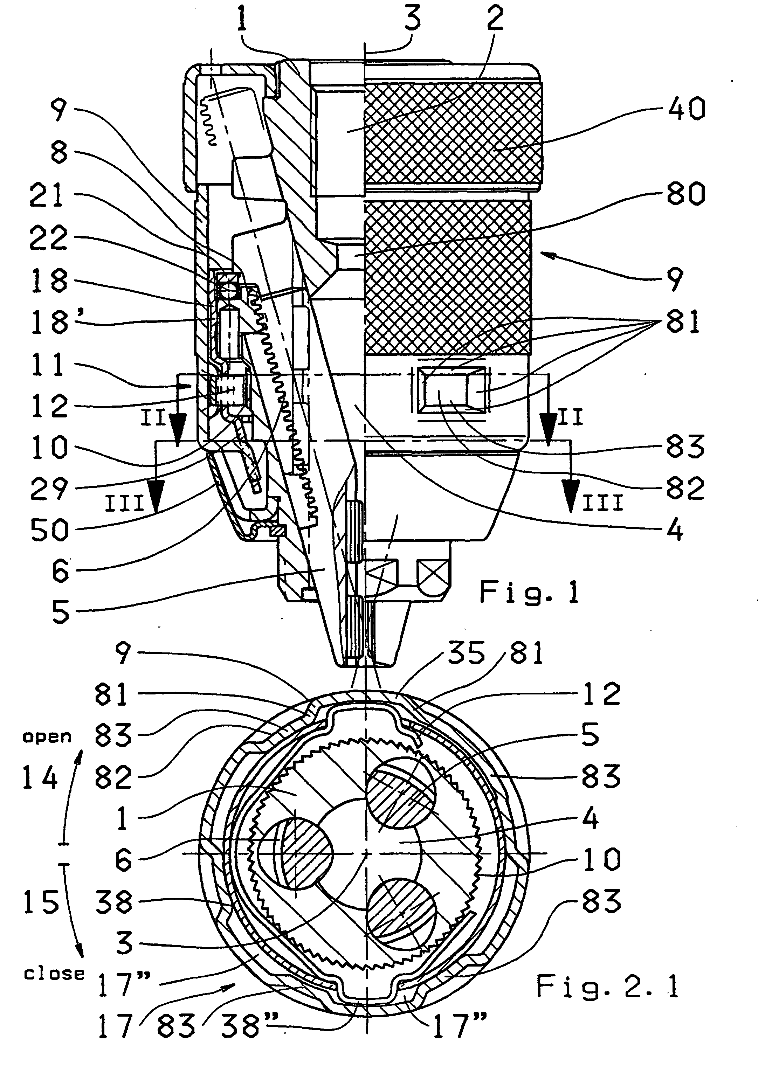

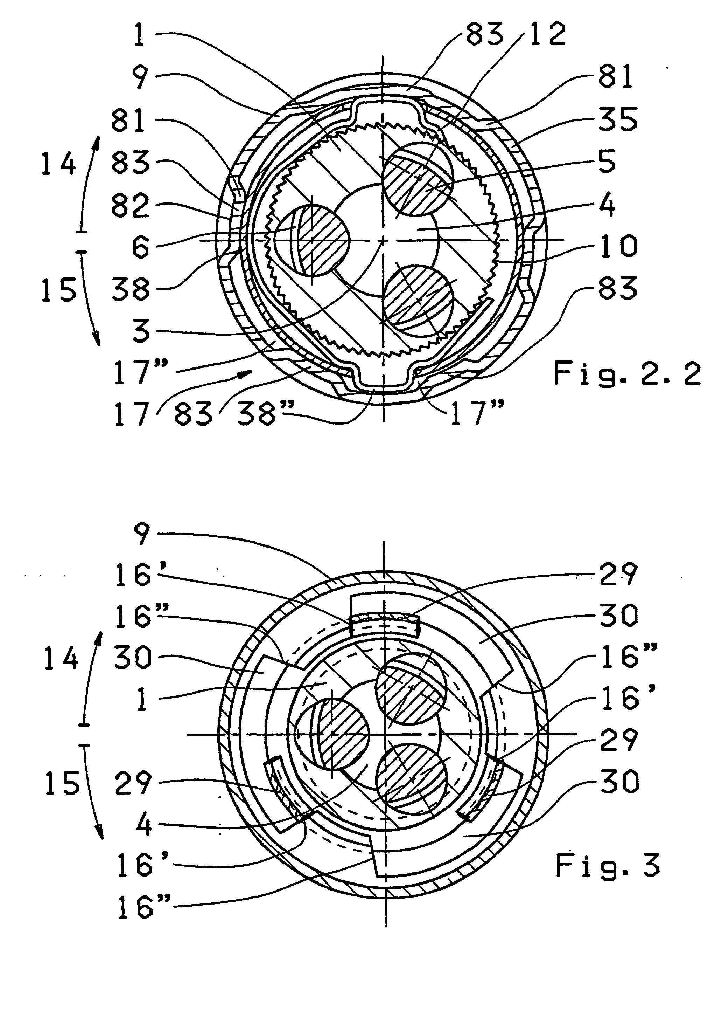

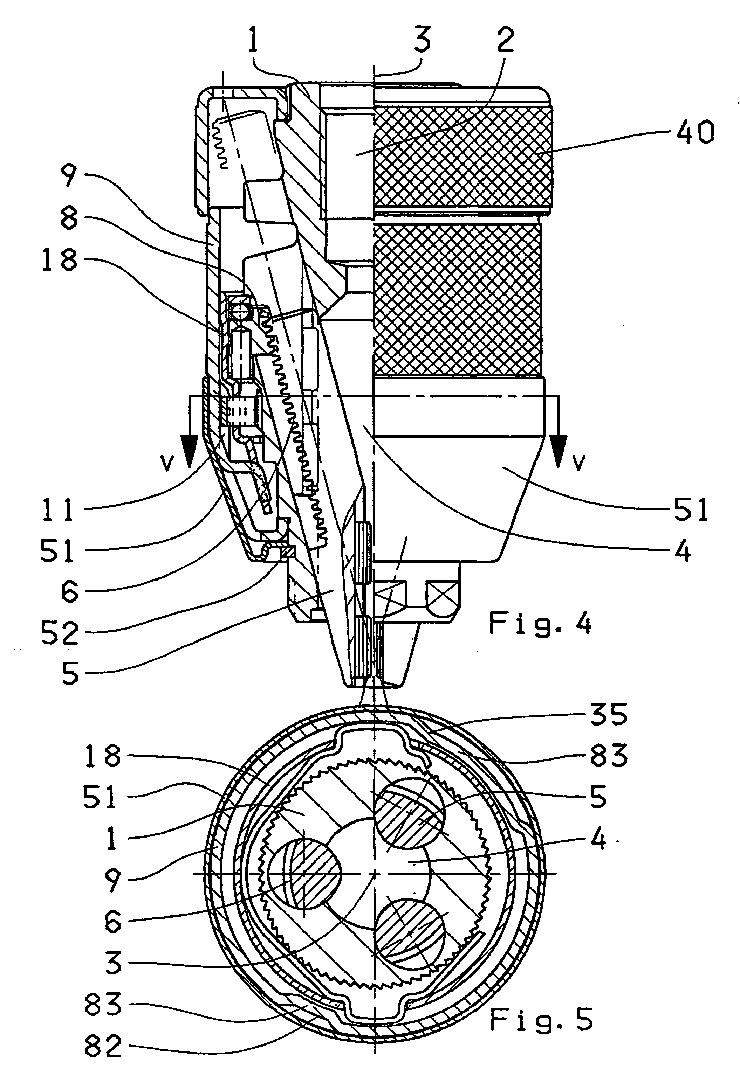

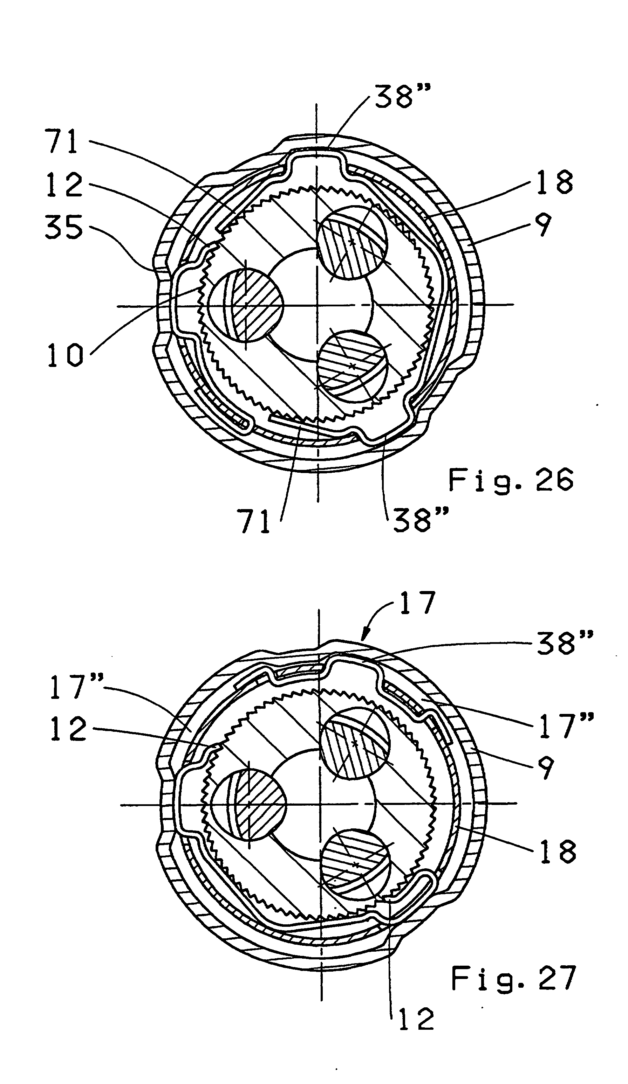

Zwischen der Spannhülse 9 und dem Gewindering 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich des Figurenpaares 2.1 und 2.2 erkennen läßt. Dabei sind die Raststellungen durch den Eingriff eines von der Kraft einer Rastfeder beaufschlagten Rastgliedes 38" auf der Seite des Gewinderings 8 in entsprechend an der Spannhülse 9 angeordnete Rastaufnahmen 17" gebildet, die Teil der Steuerkurve 35 und gleichfalls durch in die Spannhülse 9 eingeprägte Taschen 83 verwirklicht sind. Das Rastglied 38" ist insbesondere durch einen Rastnocken der Rastfeder gebildet. Die Sperrfeder und die Rastfeder sind in den Fig. 2.1, 2.2, 5, 7, 9, 23 und 24 gemeinsam von einem Federbügel 38 gebildet, der sich in Umfangsrichtung längs des Gewinderings 8 erstreckt und drehfest mit dem Gewindering 8 verbunden ist. Der Federbügel 38 kann mehrfach vorgesehen sein (Fig. 25), wodurch auch die Rasteinrichtung 17 mehrfach realisiert ist. Alternativ besteht auch die Möglichkeit einer von dem Sperrglied 12 mit Sperrfeder getrennten Ausbildung der Rasteinrichtung 17, die dann gleichfalls mehrfach und damit redundant vorhanden sein kann (Fig. 26, 28, 30).

Der Gewindering 8 besitzt den eine Führung für die Spannhülse 9 bildenden koaxialen Zwischenring 18, der die gewinderingseitigen Teile der Anschläge 16', 16" für die Spannhülse und außerdem den Federbügel 38 trägt, sowie einen Kragenteil 18' umfaßt, der den das Spanngewinde tragenden Teil des Gewinderings 8 drehfest umschließt. Dabei besteht der das Spanngewinde tragende Teil des Gewinderings 8 aus zwei umfangsmäßig geteilten, nämlich zunächst an jeder Teilung durch eine Bohrung geschwächten und dann gebrochenen Ringhälften, die in einer Ringnut des Futterkörpers 1 gegeneinander zusammengesetzt und durch den Kragenteil 18' am Futterkörper 1 zusammengehalten sind. Selbstverständlich kann aber der Gewindering 8 auch einstückig ausgebildet sein, was jedoch in der Zeichnung nicht weiter dargestellt ist.

In allen Fällen besitzt der Gewindering 8 bzw. Zwischenring 18 zur radialen Führung der Spannhülse 9 eine kreiszylindrische Außenfläche, der die Spannhülse 9 mit einer entsprechend kreiszylindrischen Innenfläche anliegt.

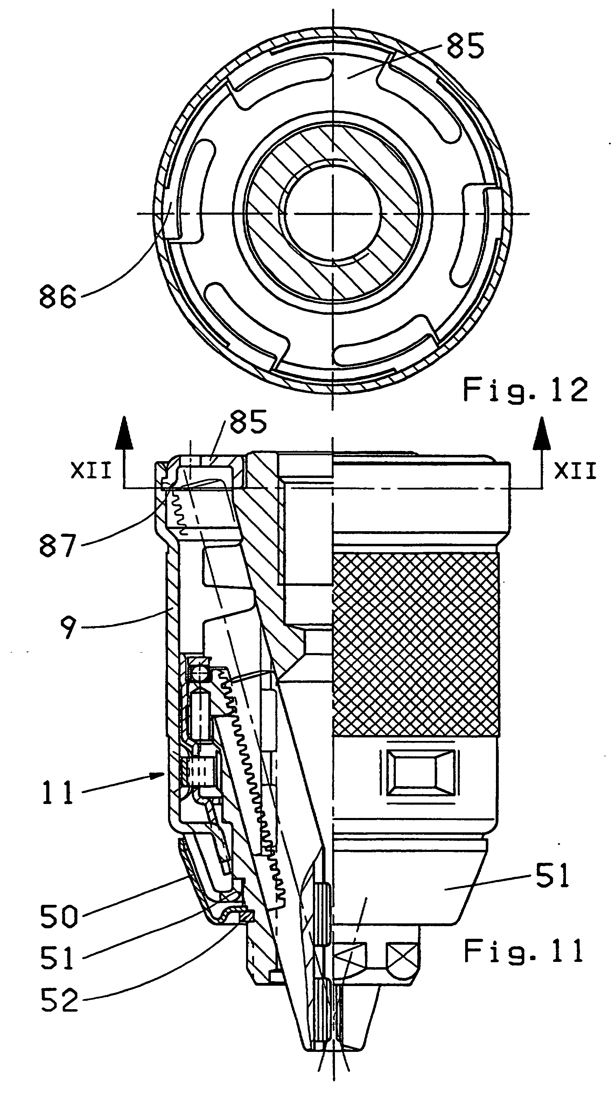

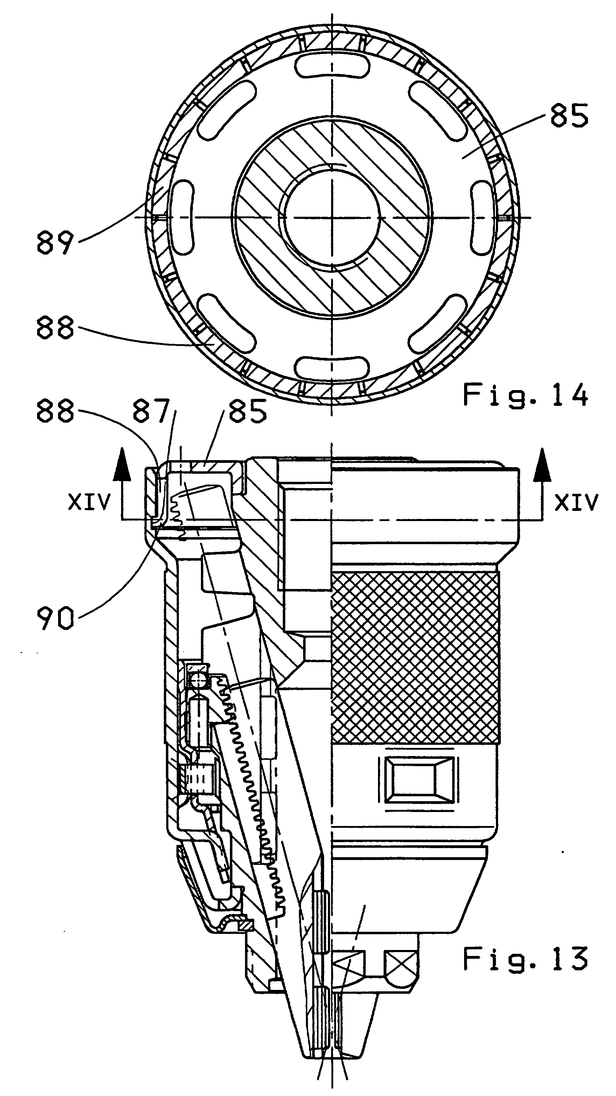

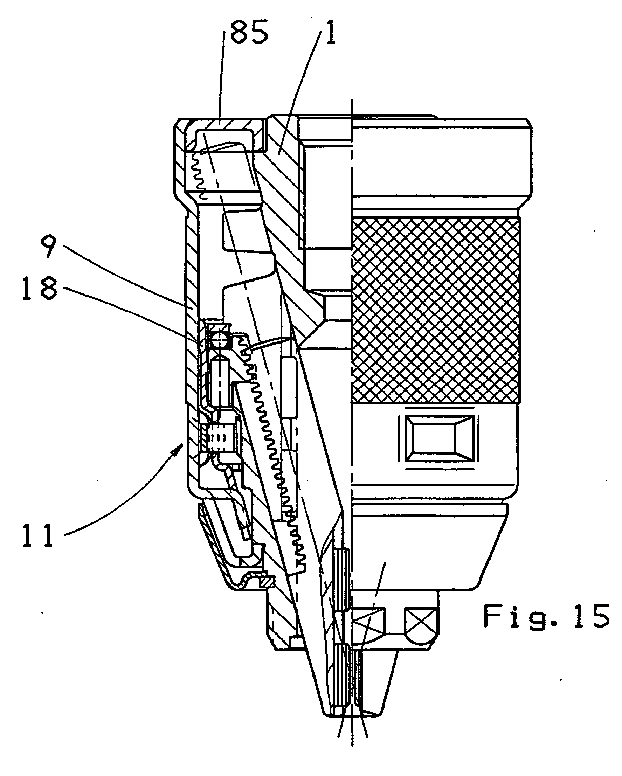

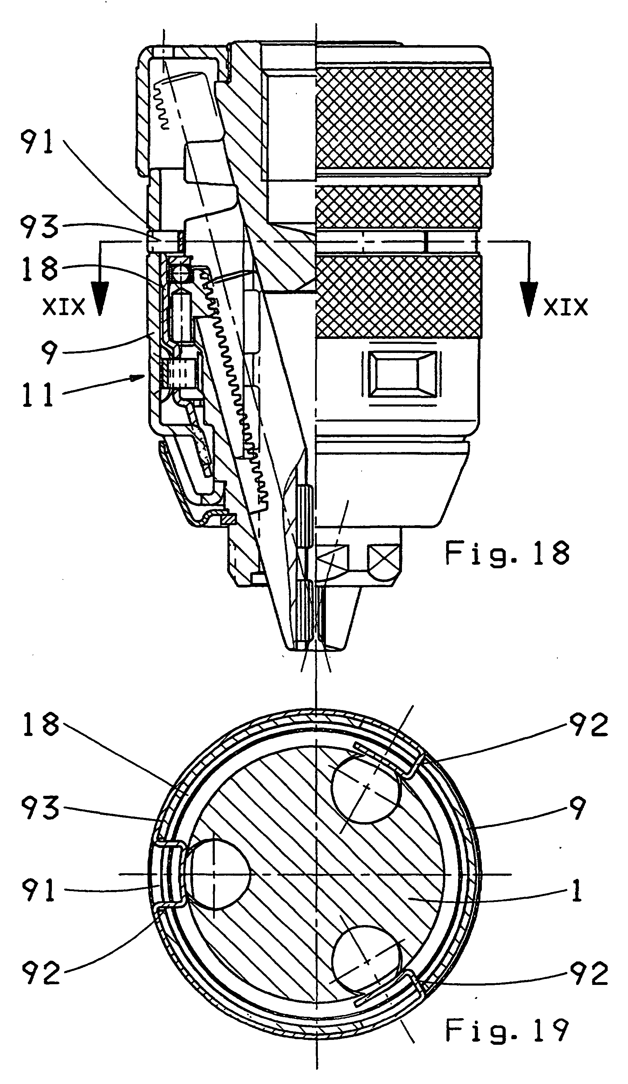

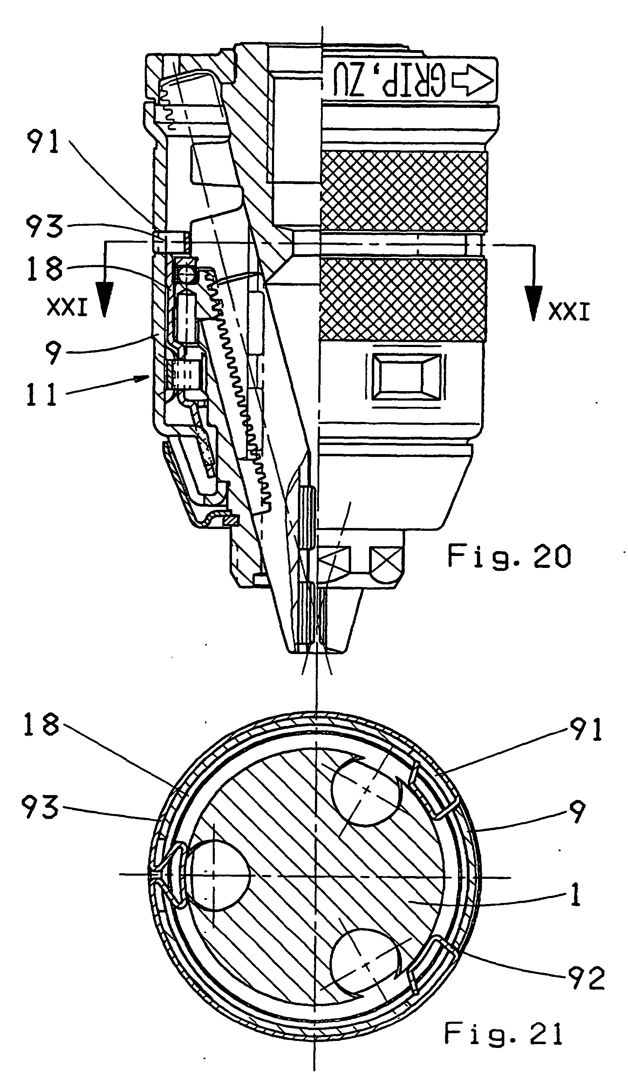

Im Ausführungsbeispiel nach den Fig. 1 bis 5 erstreckt sich diese kreiszylindrische Innenfläche an der Spannhülse 9 im gesamten axialen Bereich mit unverändertem Radius zwischen ihrem rückwärtigen Ringende und dem Gewindering 8. Daher kann die in axialer Richtung ungeteilt ausgebildete Spannhülse 9 axial von vorn her über den Futterkörper 1 auf den am Futterkörper 1 fertig montierten Gewindering 8 aufgeschoben werden, worauf die Spannhülse 9 in ihrer aufgeschobenen Endlage axial gesichert wird. Die Sicherung der Spannhülse 9 gegen axiale Verschiebungen nach vorn kann entweder am Zwischenring 18 oder im Bereich axial hinter dem Gewindering 8 am Futterkörper 1, beispielsweise an einer mit dem Futterkörper 1 verbundenen Abschlußscheibe 85 erfolgen, die auch zur radialen Führung der Spannhülse 9 im Bereich ihres rückwärtigen Ringendes beitragen kann. Im einzelnen sind an der Abschlußscheibe 85 sich in Umfangsrichtung erstreckende, radial federnde Zungen 86 ausgebildet (Fig. 11 und 12) zum Eingriff in eine an der Spannhülse 9 ausgebildeten Nut 87. Bei der Ausführungsform nach Fig. 13 und 14 ist an der Abschlußscheibe 85 ein Scheibenbund 88 angeformt, der zum Erzielen einer radialen Federwirkung durch Bundsegmente 89 gebildet ist, die ein Einführen von deren radial nach außen gekrümmten Enden 90 in die Nut 87 ermöglicht. Die Fig. 18 bis 21 zeigen die axiale Sicherung der Spannhülse 9 durch in die Spannhülse 9 eingeprägte Schlitze 91 zur Aufnahme von der axialen Abstützung auf dem Zwischenring 18 dienenden Ringschleifen 92 einer Ringklammer 93, wobei die Ringschleifen 92 auch am Futterkörper 1 abgestützt sein können (Fig. 21). Fig. 15 zeigt einen zwischen Abschlußscheibe 85 und Spannhülse 9 ausgebildeten Preßsitz, zu dessen Realisierung das axial rückwärtige Ende der Spannhülse 9 eingebördelt ist.

Axial vor der Spannhülse 9 ist ein ihr gegenüber frei verdrehbarer Anschlagring 50 vorgesehen, der am Futterkörper 1 axial unverschiebbar und drehbar gelagert ist, wozu der Anschlagring 50 axial nach hinten an einer Ringschulter 51 des Futterkörpers 1 und axial nach vorn an einem Sprengring 52 gehalten ist, der in einer Ringnut am Futterkörper 1 sitzt. Der Anschlagring 50 schützt die Spannhülse 9 davor, beim Durchbohren einer Wand an die Wand anzustoßen und dadurch gebremst zu werden, was dazu führen könnte, daß das Bohrfutter sich so festzieht, daß es nur noch mit Mühe wieder geöffnet werden kann. Auch schützt der Anschlagring 50 die Spannhülse 9 gegen größere axiale Belastung von vorn, so daß die axiale Abstützung der Spannhülse 9 nach hinten entsprechend gering beansprucht wird. Weiterhin ist der Anschlagring 50 als Kappe 51 bzw Staubschutzkappe nutzbar, die die Steuerkurve 35 überdeckt.

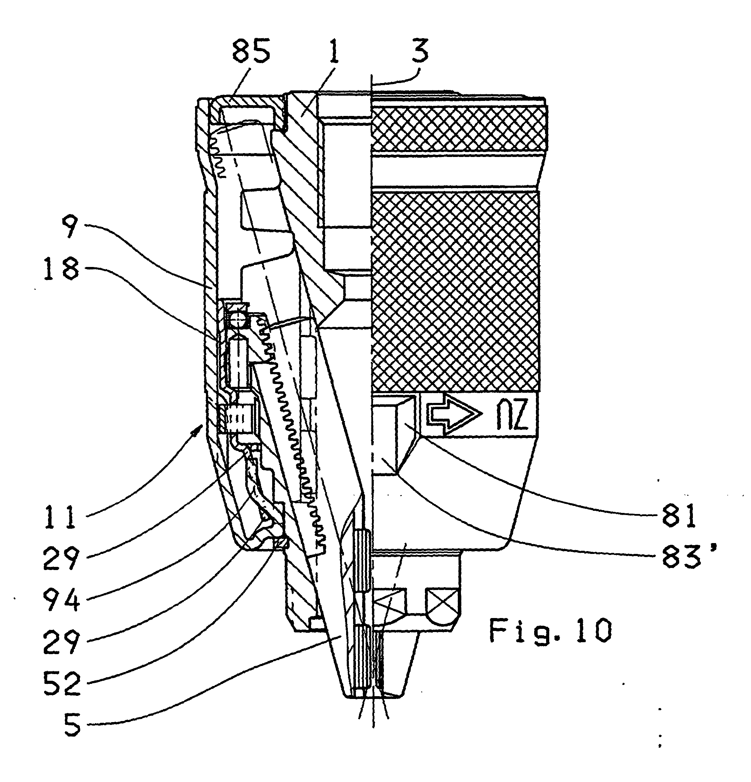

Für die Anschläge 16', 16" zur Drehbegrenzung zwischen der Spannhülse 9 und dem Gewindering 8 sind in den Ausführungsbeispielen allgemein mit 29 bezeichnete Anschlagstücke und eine das Anschlagstück 29 aufnehmende Aussparung 30 vorgesehen, wobei das Anschlagstück 29 an den Enden des Drehwegs jeweils mit einer der die Aussparung 30 in Umfangsrichtung begrenzenden beiden Stirnflächen 16', 16" zum Anschlag kommt. In den Ausführungsbeispielen sind jeweils drei solche gleichmäßig über den Futterumfang verteilt angeordnete Anschlagstücke 29 bzw. Aussparungen 30 vorhanden. Im einzelnen können die Anschlagstücke 29 als Wandstücke des Zwischenrings 18 ausgebildet sein, die vom vorderen Rand des Zwischenrings 18 axial nach vorn in die auf der Wandinnenseite der Spannhülse 9 ausgebildeten Aussparungen 30 vorstehen. Die Aussparungen können zwischen gekrümmten, geneigt verlaufenden Stegen 94 der Spannhülse 9 bestehen, die dazu nach innen umgebördelt sind (Fig. 8 bis 10).

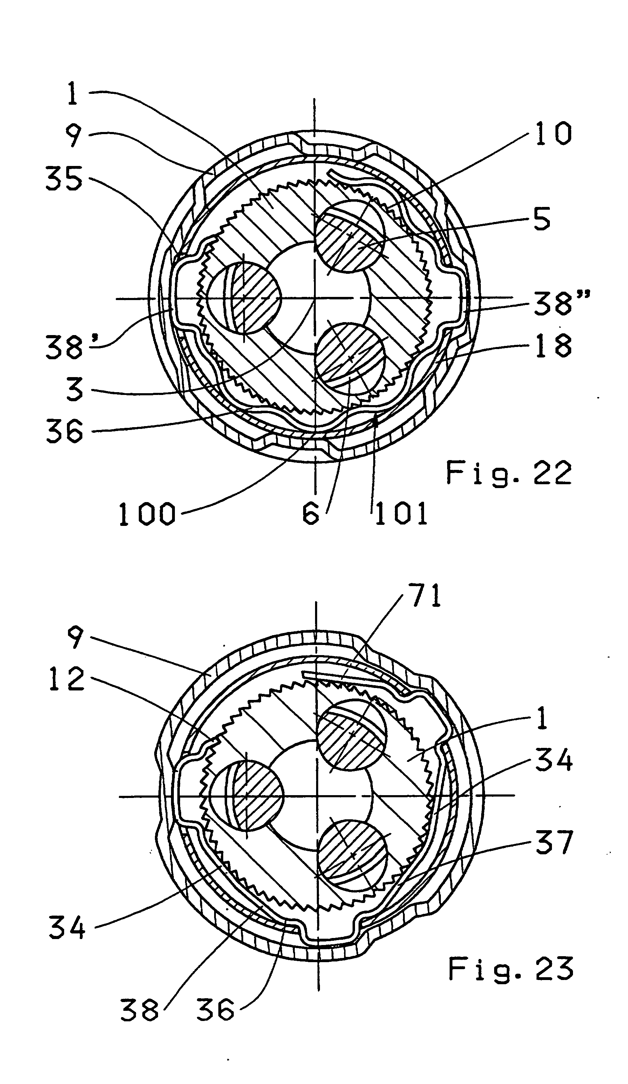

Der Federbügel 38 bildet einen sich in Umfangsrichtung erstreckenden Federarm 36, der am freien Armende das Sperrglied 12 aufweist. Um bei lang ausgedehntem Federarm 36 eine zu weiche Federcharakteristik zu vermeiden, ist bei dem Bohrfutter gemäß Fig. 22 ein durch eine Wellenstruktur 100 gebildetes Dämpfungsglied 101 realisiert. Im eingerückten Zustand des Sperrglieds 12 liegt der Federarm 36 an der Steuerkurve 35 in einem Abstand vom Sperrglied 12 an, der das Durchfedern des Federarms 35 an der Stelle des Sperrglieds 12 um mindestens dessen Eingriffstiefe in die Sperrausnehmungen 10 ermöglicht, so daß beim Festziehen des Futters das Sperrglied 12 über den Kranz der Sperrausnehmungen 10 hinwegrutschen kann. Am Federbügel 38 sind zwei in Umfangsrichtung in gegenseitigem Abstand befindliche Vorsprünge 38', 38" vorgesehen. Von diesen bildet der sperrgliedseitige Vorsprung 38' die Anlage des Federarms 36 an der Steuerkurve 35, der andere Vorsprung 38" das Rastglied 38" bzw den Rastnocken 38" der Rasteinrichtung 17. Die Vorsprünge 38', 38" sind jeweils in Form von Auswölbungen an den Federbügel 38 angebogen.

Durch die Vorspannung des Federbügels 38 wird das Sperrglied 12 außer Eingriff an den Sperrausnehmungen 10 gehalten; im Sperrzustand muß es über die Steuerkurve 35 in die Sperrausnehmungen 10 hineingedrückt werden. Jedenfalls beim Sperreingriff des Sperrglieds 12 in die Sperrausnehmungen 10 liegen die Federstege 34 des Federbügels 38 federnd am Kranz der Sperrausnehmungen 10 an, so daß sich der Federbügel 38 in seiner Lage im Zwischenring 18 selbsttätig justiert. In diesem Sinne günstig erweist sich auch ein Federschenkel 71, den der Federbügel 38 mit seinem dem Vorsprung 38" abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Vibrationen an Futterkörper 1, Gewindering 8 bzw. Zwischenring 18 und Spannhülse 9 gedämpft werden.

In den Ausführungsbeispielen sind die Anschläge 16', 16", die Sperreinrichtung 11 und die Rasteinrichtung 17 axial vor dem Spanngewinde angeordnet. Selbstverständlich liegt es im Rahmen der Erfindung, diese Teile, zumindest einige davon, axial hinter dem Spanngewinde vorzusehen, wobei sich insbesondere der körperfeste Druckring 21 dazu anbietet, mit den Sperrausnehmungen 10 versehen zu werden.

Im folgenden wird die Funktionsweise des erfindungsgemäßen Bohrfutters anhand des Ausführungsbeispiels nach den Fig. 1 bis 3 kurz erläutert:

Die Fig. 1 und 2.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17" greifende Rastvorsprung 38" sichert den Zwischenring 18 und die Spannhülse 9 gegen Verdrehungen gegeneinander, so daß beim Drehen der Spannhülse 9 über den Zwischenring 18 der Gewindering 8 relativ zum Futterkörper 1 frei verdreht werden kann, solange das Bohrfutter offen ist. Befindet sich in der Werkzeugaufnahme 4 des Bohrfutters ein Bohrerschaft und wird die Spannhülse 9 in Richtung des Pfeils 15, also im Sinne eines Schließens des Futters verdreht, erfolgt zunächst eine Mitnahme des Gewinderings 8 in der schon beschriebenen Weise, bis die Spannbacken 5 am Werkzeugschaft zur Anlage kommen. Eine weitere Mitnahme des Gewinderings 8 durch die Spannhülse 9 ist dann nicht mehr möglich, so daß sich die Spannhülse 9 unter Überwindung der Rasteinrichtung 17 in die in Fig. 2.2 gezeigte Stellung gegenüber dem Zwischenring 18 verstellt. In dieser Stellung drückt die Spannhülse 9 über die Steuerkurve 35 den Federarm 36 radial nach innen und damit das Sperrglied 12 in den eingerückten Zustand an den Sperrausnehmungen 10. Damit ist der Gewindering 8 gegenüber dem Futterkörper 1 gegen ein Verdrehen in Richtung des Pfeils 14 und damit gegen ein unerwünschtes Öffnen des Bohrfutters gesichert. Jedoch kann das Bohrfutter weiter und fester gespannt, nämlich die Spannhülse 9 relativ zum Futterkörper 1 in Richtung des Pfeiles 15 verdreht werden, wobei nun die Spannhülse 9 über die Anschläge 16" den Zwischenring 18 und damit den Gewindering 8 in Richtung des Pfeiles 15 festzieht. Zum Lösen und Öffnen des gespannten Futters (Fig. 2.2) wird zunächst die Spannhülse 9 in Richtung des Pfeiles 14 verdreht, wobei zunächst wieder die Rasteinrichtung 17 verstellt wird und sich die Anschlagstücke 29 in den Aussparungen 30 wieder verstellen und gleichzeitig die Steuerkurve 35 den Federarm 36 freigibt, so daß sich der Federarm 36 aufgrund seiner Vorspannung radial nach außen verstellen kann, bis das Sperrglied 12 aus den Sperrausnehmungen 10 ausgetreten ist. Beim weiteren Drehen der Spannhülse 9 wird über die Anschläge 16' der Gewindering 18 mitgenommen, wodurch das Bohrfutter gelöst und geöffnet wird. Im Ergebnis ist zur Handhabung des erfindungsgemäßen Bohrfutters nur die drehende Betätigung der Spannhülse 9 gegenüber dem Futterkörper 1 erforderlich, was nur eine Hand erfordert, wenn der Futterkörper 1 über die Bohrspindel gehalten oder umgekehrt die Spannhülse 9 von Hand festgehalten und der Futterkörper 1 durch die Bohrspindel gedreht wird. Die Spannhülse 9 kann sich daher axial über praktisch die ganze Länge des Bohrfutters bis zum axial hinteren Futterende erstrecken und dabei die einzige von außen der Hand zugängliche Futterhandhabe bilden. Nur wenn dennoch gewünscht wird, den Futterkörper 1 auch unabhängig von der Bohrspindel manipulieren zu können, empfiehlt es sich, die Abschlußscheibe 85 in Form eines Halterings 40 für den Futterkörper 1 auszubilden, wobei dann der Haltering 40 drehfest mit dem Futterkörper 1 verbunden sein muß.

Um in einfacher und kostengünstiger Weise die zur Verstellung des Sperrgliedes 12 notwendige Steuerkurve 35 in der Spannhülse 9 ausbilden zu können, wird diese durch mindestens einen radial von außen gegen die Spannhülse 9 gepreßten Stempel gefertigt, wobei sich mindestens eine Tasche 17 ausbildet, die vier Stege 81 aufweist, die von der radial äußeren Seite der Spannhülse 9 nach innen vorstehen und durch eine Bodenplatte 82 verbunden sind.

Bei der Fertigung der Spannhülse 9 wird zum Schutz von deren Form in die hohle Spannhülse 9 ein zur Anlage am Innenumfang der Spannhülse 9 kommender zylindrischer Stab eingeführt und radial von außen nach innen der Stempel gegen die Spannhülse 9 gepreßt, der die Tasche 83 formt. Um dabei einen möglichst weitgehenden Schutz der ursprünglichen Hülseform zu erzielen, wird der Stab axial bis über die einzuprägende Tasche 83 hinaus eingeführt und dann erst radial bis zur Anlage an den Innenumfang aufgeweitet, wobei in dem Stab Aufnahmen ausgebildet sind, die die Form der zu formenden Taschen 83 aufweisen und als Matrize wirken, in die der Stempel das Material der Spannhülse 9 einformt. Nach Ausbildung der Taschen 83 kann der Stab wieder verengt und aus der Spannhülse 9 entfernt werden. Da die in Umfangsrichtung liegenden Stege 81 der Tasche 83 zur Verstellung genutzt werden, ist es gleichfalls möglich, daß zur Ausbildung der als in axialer Richtung orientierten Nut 83' ausgebildeten Tasche 83 der Stempel axial gegen die Spannhülse 9 gepreßt wird.

## Patentansprüche

1. Bohrfutter mit einem an eine Bohrspindel anschließbaren Futterkörper (1), mit zwischen sich eine Aufnahme für das Bohrwerkzeug bildenden Spannbacken (5), die in geneigt zur Futterachse (3) verlaufenden Führungsaufnahmen zum Öffen und Schließen des Bohrfutters durch einen am Futterkörper (1) drehbar und axial unverschiebbar geführten Gewindering (8) verstellbar sind, und mit einer der Verstellung der Spannbacken (5) durch Verdrehung des Gewindesrings (8) dienenden Spannhülse (9), die eine Steuerkurve (35) zur Betätigung einer die Verdrehung des Gewinderinges (8) verhindernden bzw. freigebenden Sperreinrichtung (11) aufweist, **dadurch gekennzeichnet, daß** die Steuerkurve (35) durch Stege (81) gebildet ist, die von der radial äußeren Seite der aus Metall bestehenden Spannhülse (9) nach innen vorstehen.

2. Bohrfutter nach Anspruch 1, **dadurch gekennzeichnet, daß** die Stege (81) durch die Seitenwände mindestens einer in die Spannhülse (9) eingeprägten Tasche (83) gebildet sind.

3. Bohrfutter nach Anspruch 1 oder 2, **dadurch gekennzeichnet, daß** die in Umfangsrichtung der Spannhülse (9) einander gegenüberliegenden Stege (81 der Taschen (83) zur Betätigung der Sperreinrichtung (11) vorgesehen sind.

4. Bohrfutter nach Anspruch 2 oder 3, **dadurch gekennzeichnet, daß** über den Umfang der Spannhülse (9) verteilt mehrere Taschen (83) vorgesehen sind.

5. Bohrfutter nach einem der Ansprüche 1 bis 4, **dadurch gekennzeichnet, daß** die Steuerkurve (35) durch eine Kappe (51) überdeckt ist.

6. Bohrfutter nach Anspruch 5, **dadurch gekennzeichnet, daß** die Kappe (51) durch eine axial am Futterkörper (1) abgestützte Staubschutzkappe gebildet ist.

7. Bohrfutter nach einem der Ansprüche 1 bis 6, **dadurch gekennzeichnet, daß** die Sperreinrichtung (11) besteht aus einem koaxialen Kranz von Sperrausnehmungen (10) und aus mindestens einem Sperrglied (12), das unter der Kraft einer Sperrfeder durch die Steuerkurve (35) in die Sperrausnehmungen (10) einrückbar ist, wobei das Sperrglied (12) und die Sperrausnehmungen (10) einander in derart geneigten Flankenflächen anliegen, daß diese den Gewindering (8) in der dem öffnen des Bohrfutters entsprechenden Drehrichtung gegen Verdrehen sperren und beim Verdrehen in der anderen Drehrichtung das Sperrglied gegen die Kraft der Sperrfeder aus den Sperrausnehmungen (10) herausdrücken, und daß durch eine der in die Spannhülse (9) eingeprägten Taschen (83) ein Schaltnocken (84) zur Federspannung gegeben ist.

8. Bohrfutter nach Anspruch 7, **dadurch gekennzeichnet, daß** der Gewindering (8) drehfest mit einem koaxialen Zwischenring (18) verbunden ist, der die Sperrfeder und das Sperrglied (12) trägt, und daß der Zwischenring (18) durch Anschläge 816',16") begrenzt relativ zur Spannhülse (9) verdrehbar ist.

9. Bohrfutter nach Anspruch 7 oder 8, **dadurch gekennzeichnet, daß** eine in Umfangsrichtung zwei Raststellungen aufweisende Rasteinrichtung (17) vorgesehen ist, wobei sich das durch einen Rastnocken einer Rastfeder gebildete Rastglied (38") bei dem in die Sperrausnehmungen (10) eingerückten Sperrglied (12) in der einen Raststellung (17'). und bei dem ausgerückten Sperrglied (12) in der anderen Raststellung (17") befindet, und daß die Steuerkurve (35) die beiden Raststellungen (17',17") beinhaltet.

10. Bohrfutter nach Anspruch 9, **dadurch gekennzeichnet, daß** an der Sperrfeder zwei zum simultanen Eingriff in die Randverzahnung zur gemeinsamen Kraftübertragung vorgesehenen Sperrglieder (12) ausgebildet sind, denen jeweils eine Tasche (83) als Schaltnocken (84) zugeordnet ist.

11. Bohrfutter nach Anspruch 10, **dadurch gekennzeichnet, daß** die Sperrfeder mit einem die Ausrichtung der Sperrglieder (12) gegenüber der Sperrausnehmung (10) ermöglichenden Spiel im Zwischenring (18) angeordnet ist.

12. Bohrfutter nach Anspruch 11, **dadurch gekennzeichnet, daß** die beiden Sperrglieder (12) an den Enden der Sperrfeder angeordnet sind, daß das in der dem Öffnen des Bohrfutter entsprechenden Drehrichtung vorn liegende Sperrglied (12) in Richtung Sperrausnehmungen (10) abgekröpft ist, und daß das andere Sperrglied (12) schleifenförmig gestaltet ist zur Einwirkung auf die zum vorderen Sperrglied (12) übereinstimmende Flankenfläche.

13. Bohrfutter nach einem der Ansprüche 9 bis 12, **dadurch gekennzeichnet, daß** die Rasteinrichtung (17) zweifach vorgesehen ist.

14. Bohrfutter nach Anspruch 13, **dadurch gekennzeichnet, daß** die Rastfeder und die Sperrfeder durch einen gemeinsamen Federbügel (38) gebildet sind.

15. Bohrfutter nach Anspruch 14, **dadurch gekennzeichnet, daß** dem Federbügel (38) ein Dämpfungsglied (101) zugeordnet ist.

16. Bohrfutter nach Anspruch 15, **dadurch gekennzeichnet, daß** das Dämpfungsglied (101) durch eine dem Federbügel (38) an seinen Federarmen (36) aufgeprägte Wellenstruktur (100) gebildet ist.

17. Bohrfutter nach einem der Ansprüche 14 bis 16, **dadurch gekennzeichnet, daß** der Federbügel (38) mehrfach vorgesehen ist.

18. Bohrfutter nach einem der Ansprüche 7 bis 13, **dadurch gekennzeichnet, daß** zwei Rastfedern und zwei Sperrfedern in Umfangsrichtung alternierend angeordnet sind.

19. Bohrfutter nach einem der Ansprüche 8 bis 18, **dadurch gekennzeichnet, daß** die Spannhülse (9) an ihrem axial vorderen Ende Stege (94) aufweist, die zum Zusammenwirken mit der Zwischenhülse (18) zugeordneten Anschlagstücken (29) nach innen umgebördelt sind.

20. Bohrfutter nach Anspruch 19, **dadurch gekennzeichnet, daß** die nach innen umgebördelten Stege (94) geneigt zur Futterachse (3) verlaufen.

21. Bohrfutter nach Anspruch 19 oder 20, **dadurch gekennzeichnet, daß** die nach innen umgebördelten Stege (94) gekrümmt gestaltet sind.

22. Bohrfutter nach einem der Ansprüche 19 bis 21, **dadurch gekennzeichnet, daß** an den Stegen (94) eine radial verlaufende Planfläche zur Anlage an einem axial fest am Futterkörper (1) angeordneten Sicherungsring (52) ausgebildet ist.

23. Bohrfutter nach einem der Ansprüche 8 bis 22, **dadurch gekennzeichnet, daß** in die Spannhülse (9) Schlitze (91) eingeprägt sind zur Aufnahme von der axialen Abstützung auf dem Zwischenring (18) dienenden Ringschleifen (92) einer Ringklammer (93).

24. Bohrfutter nach Anspruch 23, **dadurch gekennzeichnet, daß** die Ringschleifen (92) am Futterkörper (1) abgestützt sind.

25. Bohrfutter nach einem der Ansprüche 1 bis 24, **dadurch gekennzeichnet, daß** die Spannhülse (9) den Futterkörper (1) bis zu dessen rückwärtigem Ende überdeckt und dort durch eine axial am Futterkörper (1) fixierte Abschlußscheibe (85) gesichert ist.

26. Bohrfutter nach Anspruch 25, **dadurch gekennzeichnet, daß** an der Abschlußscheibe (85) sich in Umfangsrichtung erstreckende, radial federnde Zungen (86) ausgebildet sind zum Eingriff in eine an der Spannhülse (9) ausgebildeten Nut (87).

27. Bohrfutter nach Anspruch 25, **dadurch gekennzeichnet, daß** an der Abschlußscheibe (85) ein Scheibenbund (88) angeformt ist, der zum Erzielen einer radialen Federwirkung durch Bundsegmente (89) gebildet ist, die ein Einführen von deren radial nach außen gekrümmten Enden (90) in eine an der Spannhülse (9) ausgebildeten Nut (87) ermöglicht.

28. Bohrfutter nach Anspruch 25, **dadurch gekennzeichnet, daß** zwischen der Spannhülse (9) und der Abschlußscheibe (85) ein Preßsitz mittels einer Umbördelung des axial rückwärtigen Endes der Spannhülse (9) gebildet ist.

29. Verfahren zur Herstellung einer eine Steuerkurve aufweisenden Spannhülse (9) für ein Bohrfutter gemäß einem der Ansprüche 1 bis 28, **dadurch gekennzeichnet, daß** durch einen Stempel eine radial von außen nach innen weisende Tasche (83) in den Umfang der Spannhülse (9) geprägt wird.

30. Verfahren nach Anspruch 29, **dadurch gekennzeichnet, daß** vor Annäherung des Stempels an die Spannhülse (9) in diese ein am Innenumfang zur Anlage kommender zylindrischer Stab eingeführt wird.

31. Verfahren nach Anspruch 29, **dadurch gekennzeichnet, daß** der Stab axial von hinten in die Spannhülse (9) eingeführt wird bis knapp vor die einzuprägende Tasche (83).

32. Verfahren nach Anspruch 30, **dadurch gekennzeichnet, daß** der Stab nach dem Einführen radial bis zur Anlage an den Innenumfang der Spannhülse (9) aufgeweitet und nach dem Einprägen der Tasche (83) durch den radial an die Spannhülse (9) gepreßten Stempel für des Stabes Entfernung aus der Spannhülse (9) radial wieder verengt wird, wobei der Stab nach Art einer Matrize die der Form der zu formenden Taschen (83) aufweisenden Aufnahmen aufweist, in die der Stempel lokal die Außenfläche der Spannhülse (9) einpreßt.

33. Verfahren nach einem der Ansprüche 29 bis 32, **dadurch gekennzeichnet, daß** zur Ausbildung der als in axialer Richtung orientierten Nut (83') ausgebildeten Tasche (83) der Stempel axial gegen die Spannhülse (9) gepreßt wird.

## Claims

1. A drilling chuck comprising a chuck body (1) which can be connected to a drilling spindle, clamping jaws (5) which form between them a receiving means for the drilling tool and which are displaceable in guide receiving means extending inclinedly relative to the chuck axis (3) for opening and closing of the drilling chuck by a screwthreaded ring (8) which is guided rotatably and axially immovably on the chuck body (1), and a clamping sleeve (9) which serves for displacement of the clamping jaws (5) by rotation of the screwthreaded ring (8) and which has a control cam (35) for actuation of a locking device (11) for preventing or enabling the rotary movement of the screwthreaded ring (8), **characterised in that** the control cam (35) is formed by legs (81) which project inwardly from the radially outward side of the clamping sleeve (9) which consists of metal.

2. A drilling chuck according to claim 1 **characterised in that** the legs (81) are formed by the side walls of at least one pocket (83) which is impressed into the clamping sleeve (9).

3. A drilling chuck according to claim 1 or claim 2 **characterised in that** the legs (81) of the pockets (83), which legs are in mutually opposite relationship in the peripheral direction of the clamping sleeve (9), are provided for actuation of the locking device (11).

4. A drilling chuck according to claim 2 or claim 3 **characterised in that** a plurality of pockets (83) are provided distributed over the periphery of the clamping sleeve (9).

5. A drilling chuck according to one of claims 1 to 4 **characterised in that** the control cam (35) is covered by a cap (51).

6. A drilling chuck according to claim 5 **characterised in that** the cap (51) is formed by a dust-protection cap which is supported axially on the chuck body (1).

7. A drilling chuck according to one of claims 1 to 6 **characterised in that** the locking device (11) comprises a coaxial ring of locking openings (10) and at least one locking member (12) which can be pressed into engagement in the locking openings (10) under the force of a locking spring by the control cam (35), wherein the locking member (12) and the locking openings (10) bear against each other at flank surfaces inclined in such a way that they lock the screwthreaded ring (8) to prevent rotation thereof in the direction of rotation corresponding to opening of the drilling chuck and upon rotation in the other direction of rotation urge the locking member out of the locking openings (10) against the force of the locking spring, and a switching projection (84) for providing the spring biasing is afforded by one of the pockets (83) impressed into the clamping sleeve (9).

8. A drilling chuck according to claim 7 **characterised in that** the screwthreaded ring (8) is non-rotatably connected to a coaxial intermediate ring (18) which carries the locking spring and the locking member (12) and that the intermediate ring (18) is rotatable relative to the clamping sleeve (9) limitedly by abutments (16', 16").

9. A drilling chuck according to claim 7 or claim 8 **characterised in that** there is provided a detent device (17) which has two detent positions in the peripheral direction, wherein the detent member (38") formed by a detent projection of a detent spring is in the one detent position (17') when the locking member (12) is engaged into the locking openings (10) and it is in the other detent position (17") when the locking member (12) is disengaged, and that the control cam (35) contains the two detent positions (17', 17").

10. A drilling chuck according to claim 9 **characterised in that** provided on the locking spring are two locking members (12) which are provided for simultaneous engagement into the edge tooth arrangement for joint force transmission and with each of which is associated a respective pocket (83) as the switching projection (84).

11. A drilling chuck according to claim 10 **characterised in that** the locking spring is arranged in the intermediate ring (18) with a clearance which permits alignment of the locking members (12) with respect to the locking opening (10).

12. A drilling chuck according to claim 11 **characterised in that** the two locking members (12) are arranged at the ends of the locking spring, that the locking member (12) which leads in the direction of rotation corresponding to opening of the drilling chuck is offset in the direction of the locking openings (10) and that the other locking member is of a loop-shaped configuration for acting on the flank surface which is coincident with respect to the front locking member (12).

13. A drilling chuck according to one of claims 9 to 12 **characterised in that** the detent device (17) is provided in duplicate.

14. A drilling chuck according to claim 13 **characterised in that** the detent spring and the locking spring are formed by a common spring loop (38).

15. A drilling chuck according to claim 14 **characterised in that** a damping member (101) is associated with the spring loop (38).

16. A drilling chuck according to claim 15 **characterised in that** the damping member (101) is formed by a corrugation structure (100) impressed on the spring loop (38) at its spring arms (36).

17. A drilling chuck according to one of claims 14 to 16 **characterised in that** there are provided a plurality of the spring loops (38).

18. A drilling chuck according to one of claims 7 to 13 **characterised in that** two detent springs and two locking springs are arranged alternately in the peripheral direction.

19. A drilling chuck according to one of claims 8 to 18 **characterised in that** at its axially forward end the clamping sleeve (9) has legs (94) which are flanged over inwardly for co-operation with abutment portions (29) associated with the intermediate sleeve (18).

20. A drilling chuck according to claim 19 **characterised in that** the inwardly flanged-over legs (94) extend inclinedly relative to the chuck axis (3).

21. A drilling chuck according to claim 19 or claim 20 **characterised in that** the inwardly flanged-over legs (94) are of a curved configuration.

22. A drilling chuck according to one of claims 19 to 21 **characterised in that** provided on the legs (94) is a radially extending flat surface for bearing against a securing ring (52) arranged axially fixedly on the chuck body (1).

23. A drilling chuck according to one of claims 8 to 22 **characterised in that** impressed into the clamping sleeve (9) are slots (91) for receiving ring loops (92) of a ring clip (93), the ring loops serving for axial support on the intermediate ring (18).

24. A drilling chuck according to claim 23 **characterised in that** the ring loops (92) are supported against the chuck body (1).

25. A drilling chuck according to one of claims 1 to 24 **characterised in that** the clamping sleeve (9) covers over the chuck body (1) as far as the rearward end thereof and is secured there by an end disc (85) fixed axially to the chuck body (1).

26. A drilling chuck according to claim 25 **characterised in that** provided on the end disc (85) are radially resilient tongues (86) extending in the peripheral direction for engagement into a groove (87) on the clamping sleeve (9).

27. A drilling chuck according to claim 25 **characterised in that** formed at the end disc (85) is a disc collar (88) which is formed by collar segments (89) to produce a radial spring action which permits the radially outwardly curved ends (90) thereof to be introduced into a groove (87) on the clamping sleeve (9).

28. A drilling chuck according to claim 25 **characterised in that** a press fit is formed between the clamping sleeve (9) and the end disc (85) by means of a flanged-over configuration of the axially rearward end of the clamping sleeve (9).

29. A process for the production of a clamping sleeve (9) having a control cam for a drilling chuck according to one of claims 1 to 28 **characterised in that** a pocket (83) which faces radially from the outside inwardly is impressed into the periphery of the clamping sleeve (9) by a punch.

30. A process according to claim 29 **characterised in that** prior to the punch approaching the clamping sleeve (9) a cylindrical bar which comes to bear against the inside periphery is introduced into the clamping sleeve.

31. A process according to claim 29 **characterised in that** the bar is introduced axially from the rear into the clamping sleeve (9) until shortly before the pocket (83) to be impressed therein.

32. A process according to claim 30 **characterised in that** after being introduced the bar is expanded radially until it bears against the inside periphery of the clamping sleeve (9) and after impression of the pocket (83) by the punch which is pressed radially against the clamping sleeve (9) for removal of the bar from the clamping sleeve (9) is radially reduced against, wherein the bar has in the manner of a female die receiving means which are in the shape of the pockets (83) to be formed and into which the punch locally presses the outside surface of the clamping sleeve (9).

33. A process according to one of claims 29 to 32 **characterised in that** the punch is pressed axially against the clamping sleeve (9) to produce the pocket (83) which is provided in the form of a groove (83') oriented in the axial direction.

## Revendications

1. Mandrin de perçage, avec un corps de mandrin (1) qui peut être lié à une broche de perçage, avec des mors de serrage (5) qui définissent entre eux un logement pour l'outil de perçage et qui, à des fins d'ouverture et de fermeture du mandrin, peuvent être déplacés dans des logements de guidage inclinés par rapport à l'axe de mandrin (3), au moyen d'une bague filetée (8) guidée en rotation sur le corps de mandrin (1) mais fixe dans la direction axiale, avec également une bague de serrage (9) qui permet un réglage des mors de serrage (5) par rotation de la bague filetée (8) et comporte une came de commande (35) pour actionner un dispositif de verrouillage (11) empêchant ou autorisant la rotation de la bague filetée (8), **caractérisé en ce que** la came de commande (35) est formée par des plans fixes (81) qui font saillie en direction de l'intérieur depuis la face radialement extérieure de la bague de serrage (9) en métal.

2. Mandrin de perçage selon la revendication 1, **caractérisé en ce que** les plans fixes (81) sont formés par les parois latérales d'au moins une poche (83) façonnée dans la bague de serrage (9).

3. Mandrin de perçage selon la revendication 1 ou 2, **caractérisé en ce que** les plans fixes (81) mutuellement en vis-à-vis dans la direction périphérique des poches (83) sont a prévus pour actionner le dispositif de verrouillage (11).

4. Mandrin de perçage selon la revendication 2 ou 3, **caractérisé en ce qu'**il est prévu plusieurs poches (83) réparties sur le pourtour de la bague de serrage (9).

5. Mandrin de perçage selon une des revendications 1 à 4, **caractérisé en ce que** la came de commande (35) est recouverte par une coiffe (51).

6. Mandrin de perçage selon la revendication 5, **caractérisé en ce que** la coiffe (51) est une coiffe anti-poussière qui prend appui dans la direction axiale sur le corps de mandrin.

7. Mandrin de perçage selon une des revendications 1 à 6, **caractérisé en ce que** le dispositif de verrouillage (11) est formé d'une couronne coaxiale d'échancrures de verrouillage (10) et d'au moins un organe de verrouillage (12), qui est repoussé par la came de commande (35) dans les échancrures de verrouillage (10), à l'encontre de la force d'un ressort de verrouillage, l'organe de verrouillage (12) et les échancrures de verrouillage (10) étant en contact réciproque par des surfaces de flanc inclinées d'une manière telle que celles-ci bloquent la bague filetée (8) dans le sens de rotation correspondant à l'ouverture du mandrin et, lors de la rotation dans le sens opposé, repoussent l'organe de verrouillage hors des échancrures de verrouillage (10), à l'encontre de la force du ressort de verrouillage, et **en ce que** l'une des poches (83) façonnées dans la bague de serrage (9) forme une came de commande (84) pour la tension du ressort.

8. Mandrin de perçage selon la revendication 7, **caractérisé en ce que** la bague filetée (8) est solidaire en rotation d'une bague intermédiaire (18) coaxiale, qui porte le ressort de verrouillage et l'organe de verrouillage (12), et **en ce que** la bague intermédiaire (18) est limitée en rotation par rapport à la bague de serrage (9) par des butées (16', 16").

9. Mandrin selon la revendication 7 ou 8, **caractérisé en ce qu'**il est prévu un dispositif d'encliquetage (17), qui présente deux positions d'encliquetage dans la direction périphérique, l'organe d'encliquetage (38") formé par un doigt d'encliquetage sur un ressort d'encliquetage, se trouvant dans l'une des positions d'encliquetage (17'), lorsque l'organe de verrouillage (12) est engagé dans les échancrures de verrouillage (10), et dans l'autre position d'encliquetage (17'), lorsque l'organe de verrouillage (12) est dégagé, et **en ce que** la came de commande (35) présente les deux positions d'encliquetage (17', 17").

10. Mandrin de perçage selon la revendication 9, **caractérisé en ce que** sur le ressort de verrouillage sont aménagés deux organes de verrouillage (12), qui sont agencés pour venir en prise simultanément avec la denture périphérique aux fins de transmettre conjointement la force, et à chacun desquels est associée une poche (83), en tant que came de déclenchement (84).

11. Mandrin de perçage selon la revendication 10, **caractérisé en ce que** le ressort de verrouillage est monté dans la bague intermédiaire (18) avec un jeu qui permet à l'organe de verrouillage (12) de se positionner par rapport à l'échancrure de verrouillage (10).

12. Mandrin de perçage selon la revendication 11, **caractérisé en ce que** les deux organes de verrouillage (12) sont disposés aux extrémités du ressort de verrouillage, **en ce que** l'organe de verrouillage (12) placé en premier, vu dans le sens de rotation correspondant à l'ouverture du mandrin, est coudé en direction des échancrures d'encliquetage (10) et **en ce que** l'autre organe de verrouillage (12) est conformé en boucle aux fins d'agir sur la surface de flanc correspondant à l'organe de verrouillage (12) antérieur.

13. Mandrin de perçage selon une des revendications 9 à 12, **caractérisé en ce que** le dispositif de verrouillage (17) est prévu en double.

14. Mandrin de perçage selon la revendication 13, **caractérisé en ce que** le ressort d'encliquetage et le ressort de verrouillage sont formés par un ressort en étrier (38) commun.

15. Mandrin de perçage selon la revendication 14, **caractérisé en ce qu'**un organe amortisseur (101) est associé au ressort en étrier (38).

16. Mandrin de perçage selon la revendication 15, **caractérisé en ce que** l'organe amortisseur (101) est formé par une structure ondulée (100) réalisée sur le ressort en étrier (38), sur les bras (36) de celui-ci.

17. Mandrin de perçage selon une des revendications 14 à 16, **caractérisé en ce qu'**il est prévu plusieurs ressorts en étrier (38).

18. Mandrin de perçage selon une des revendications 7 à 13, **caractérisé en ce que** deux ressorts d'encliquetage et deux ressorts de verrouillage sont disposés en alternance dans la direction périphérique.

19. Mandrin de perçage selon une des revendications 8 à 18, **caractérisé en ce que** la bague de serrage (9), à son extrémité antérieure, vu dans la direction axiale, présente des nervures (94) qui sont rabattues en direction de l'intérieur aux fins de coopérer avec des pièces de butée (29) associées à la bague intermédiaire (18).

20. Mandrin de perçage selon la revendication 19, **caractérisé en ce que** les nervures (94) rabattues en direction de l'intérieur sont inclinées par rapport à l'axe de mandrin (3).

21. Mandrin de perçage selon la revendication 19 ou 20, **caractérisé en ce que** les nervures (94) rabattues en direction de l'intérieur sont courbes.

22. Mandrin de perçage selon une des revendications 19 à 21, **caractérisé en ce qu'**une surface plane radiale, destinée à venir en appui contre un anneau élastique (52), fixe dans la direction axiale, disposé sur le corps de mandrin (1), est aménagée sur les nervures (94).

23. Mandrin de perçage selon une des revendications 8 à 22, **caractérisé en ce que** des fentes (91) sont aménagées dans la bague de serrage (9) pour recevoir des anses (92) d'une pince élastique (93) servant d'appui sur la bague intermédiaire (18).

24. Mandrin de perçage selon la revendications 23, **caractérisé en ce que** les anses (92) prennent appui sur le corps de mandrin (1).

25. Mandrin de perçage selon une des revendications 1 à 24, **caractérisé en ce que** la bague de serrage (9) recouvre le corps de mandrin (1) jusqu'à son extrémité arrière et est tenue à ce niveau par une plaque de fermeture (85) fixée axialement au corps de mandrin (1).

26. Mandrin de perçage selon la revendication 25, **caractérisé en ce que** sur la plaque de fermeture (85) sont aménagées des languettes (86) élastiques dans la direction radiale, qui s'étendent dans la direction périphérique et s'engagent dans une gorge (87) aménagée dans la bague de serrage (9).

27. Mandrin de perçage selon la revendication 25, **caractérisé en ce que** sur la plaque de fermeture (85) est aménagé un collet (88) qui, pour obtenir un effet de ressort radial est conformé avec des segments de collet (89), dont les extrémités (90) courbées radialement vers l'extérieur s'engagent dans gorge (87) prévue dans la bague de serrage (9).

28. Mandrin de perçage selon la revendication 25, **caractérisé en ce qu'**un ajustement serré entre la bague de serrage (9) et la plaque de fermeture (85) est obtenu par rabattement de l'extrémité arrière, vu dans la direction axiale, de la bague de serrage (9).

29. Procédé de fabrication d'une bague de serrage (9) pourvue d'une came de commande pour un mandrin de perçage selon une des revendications 1 à 28, **caractérisé en ce qu'**on réalise à l'aide d'un poinçon, dans la surface extérieure de la bague de serrage (9), une poche (83) orientée radialement de l'extérieur vers l'intérieur.

30. Procédé selon la revendication 29, **caractérisé en ce qu'**avant d'appliquer le poinçon contre la bague de serrage (9), on introduit dans celle-ci un barreau cylindrique qui vient en appui sur la surface périphérique intérieure de la bague de serrage.

31. Procédé selon la revendication 29, **caractérisé en ce qu'**on introduit le barreau axialement par l'arrière dans la bague de serrage jusqu'à proximité immédiate de la poche (83) à réaliser.

32. Procédé selon la revendication 30, **caractérisé en ce qu'**une fois le barreau introduit, on le dilate axialement de manière à ce qu'il vienne en appui radial contre la surface périphérique intérieure de la bague de serrage (9), et après façonnage de la poche (83) à l'aide du poinçon pressé radialement sur la bague de serrage, on rétracte radialement le barreau pour l'extraire de la bague de serrage (9), le barreau comportant à la manière d'une matrice des logements de la forme des poches (83) à façonner, dans lesquels le poinçon repousse la surface extérieure de la bague de serrage (9).

33. Procédé selon une des revendications 29 à 32, **caractérisé en ce que** pour façonner la poche (83) conformée en rainure (83') orientée dans la direction axiale, on presse le poinçon axialement contre la bague de serrage (9).
